# EUROPEAN PATENT SPECIFICATION

(11) **EP 3 306 392 B1**
(45) Date of publication and mention of the grant of the patent: **05.05.2021**
(21) Application number: 16192627.4
(22) Date of filing: 06.10.2016
(51) Int. Cl.: G03B 21/20

(54) **ILLUMINATION SYSTEM AND PROJECTION APPARATUS**
BELEUCHTUNGSSYSTEM UND PROJEKTIONSVORRICHTUNG
SYSTÈME D'ÉCLAIRAGE ET APPAREIL DE PROJECTION

(43) Date of publication of application: 11.04.2018
(73) Proprietor: Coretronic Corporation, Hsin-Chu 300 (TW)
(72) Inventor: CHENG, Chuan-Te, 300 Hsin-Chu (TW); LIN, Meng-Hsuan, 300 Hsin-Chu (TW)
(74) Representative: Ter Meer Steinmeister & Partner

(56) References cited:
- EP-A2- 1 605 199
- WO-A1-2009/017992
- DE-A1-102010 062 465
- US-A1- 2012 099 082
- US-A1- 2013 163 224
- US-A1- 2014 347 842
- US-A1- 2015 146 409

## Description

### FIELD OF THE INVENTION

The invention relates to an illumination system, and more particularly to an illumination system and a projection apparatus equipped with the illumination system having a wavelength conversion element.

### BACKGROUND OF THE INVENTION

In US 2014/347842 A1 a radiation generating apparatus is disclosed. The apparatus comprises a first radiation generating source for generating radiation comprising a first range of wavelengths, a second radiation generating source for generating radiation comprising a second range of wavelengths and a photoluminescent material which is arranged to absorb radiation in the first and second wavelength range and generate radiation comprising a third range of wavelengths. The material comprises a first facet which is arranged to receive radiation from the first radiation source from a first direction and a second facet which is arranged to receive radiation from the second radiation source from a second direction. The first and second directions are substantially collinear, but opposing directions to provide for an increased illumination of the material across the same area of the material.

In US 2012/099082 A1 an illumination apparatus including a first light emitting device, a first phosphor layer, a second light emitting device and a second phosphor layer and a beam combining element is provided. The first light emitting device is capable of providing a first light beam and the first phosphor layer is disposed on the transmission path of the first light beam. The second light emitting device is disposed opposite to the first light emitting device and for providing a second light beam, wherein the second phosphor layer is disposed on the transmission path of the second light beam. The beam combining element is disposed between the first phosphor layer and the second phosphor layer. In addition, the invention also provides a projection apparatus.

US 2015/146409 A1 provides a light source apparatus including first and second light sources that output light in mutually opposing directions along a single optical axis; a wavelength conversion element that is disposed between these light sources and that generates light of a wavelength different from that of said light due to irradiation with the light; a first optical member that is disposed between the wavelength conversion element and the first light source, that transmits the light therefrom, and that reflects back light that is scattered towards the first light source, toward the wavelength conversion element; and a second optical member that is disposed between the wavelength conversion element and the second light source, that transmits the light therefrom, and that deflects, in a direction intersecting the optical axis, the light scattered toward the second light source and the light reflected back by the first optical member.

EP 1 605 199 A2 proposes an illumination device using a wavelength converting element, such as a phosphor layer, that is physically separated from a light source, such as one or more light emitting diodes, a Xenon lamp or a Mercury lamp. The wavelength converting element is optically separated from the light source, so that the converted light emitted by the wavelength converting element is prevented from being incident on the light source. Accordingly, the temperature limitations of the wavelength converting element are removed, thereby permitting the light source to be driven with an increased current to produce a higher radiance. Moreover, by optically separating the wavelength converting element from the light source, the conversion and recycling efficiency of the device is improved, which also increases radiance.

Basically, the projector with the solid-state light source has the following three types of light source systems: lasers, light emitting diodes (LEDs), and a combination of laser and light emitting diodes. Laser light source system usually uses blue laser with fluorescence wheel or phosphor wheel, and the fluorescent wheel contains phosphor layer for exciting red beam or phosphor layer for exciting green beam. LED light source system usually comprises a light emitting diode module for emitting red light, a light emitting diode module for emitting green light and a light emitting diode module for emitting blue light. The light source system with a combination of laser and light emitting diodes usually uses blue laser with fluorescence wheel, wherein the fluorescent wheel contains phosphor for exciting red beam or phosphor for exciting green beam, and the beam with the rest colors are emitted by light emitting diode or laser with specified wavelengths.

Generally, the existing technology uses dichroic mirror to combine the red, green and blue beams provided by the respective light source modules. However, due to the physical limitation of the dichroic mirror, only one of the red, green or blue light source modules is selected to use. Therefore, when the brightness of image display needs to enhance, either the power of each light source module or the quantity of laser or light emitting diodes in each light source module is required to increase. However, the aforementioned approaches may lead to the following problems: (1) the photoelectric conversion efficiency decreases if simply increasing the power of the light source module, further, the increase in power may disproportionate to the increase in the brightness and the brightness may be saturated; and therefore, the brightness may not be enhanced by indefinitely increasing the power; (2) the component size of the light source system may increase and the entire volume of the light source system may become large if simply increasing the quantity of laser or light emitting diodes; (3) the etendue may increase if simply increasing the quantity of laser or light emitting diodes, and the brightness may not be able to enhance any longer by increasing the quantity of laser or light emitting diodes if the etendue has a mismatch with the designing configuration of the projector or the etendue reaches to the maximum.

The information disclosed in this "BACKGROUND OF THE INVENTION" section is only for enhancement understanding of the background of the invention and therefore it may contain information that does not form the prior art that is already known to a person of ordinary skill in the art. Furthermore, the information disclosed in this "BACKGROUND OF THE INVENTION" section does not mean that one or more problems to be solved by one or more embodiments of the invention were acknowledged by a person of ordinary skill in the art.

### SUMMARY OF THE INVENTION

One object of the invention is to provide an illumination system able to enhance the optical power of the beam provided by the illumination system.

Another object of the invention is to provide an illumination system including three light source assemblies with various colors, and the illumination system has enhanced optical power of the beam provided by the illumination system.

Still another object of the invention is to provide an illumination system having enhanced optical power of the wavelength conversion beam without increasing the light etendue; and consequentially, a projection apparatus using the illumination system has enhanced brightness of the images projected onto a screen.

Other objects and advantages of the invention may be further illustrated by the technical features broadly embodied and described as follows.

In order to achieve one or a portion of or all of the objects or other objects, the invention provides a projection apparatus according to the independent claim. Advantageous embodiments are described in the dependent claims. It is proposed a projection apparatus comprising a first light source assembly. The first light source assembly comprises a first excitation light source, a second excitation light source, a first dichroic element, a first wavelength conversion element, a first collimating element and a second collimating element. The first excitation light source is configured to provide a first excitation beam. The second excitation light source is configured to provide a second excitation beam. The first excitation beam and the second excitation beam have the same color. The first dichroic element is disposed between the first excitation light source and the second excitation light source. The second excitation beam is transmitted toward the first excitation light source through the first dichroic element. The first wavelength conversion element is disposed between the first excitation light source and the first dichroic element. The first wavelength conversion element is configured to convert the first excitation beam and the second excitation beam into a first wavelength conversion beam and transmit the first wavelength conversion beam toward the first dichroic element. The first collimating element is disposed between the first wavelength conversion element and the first dichroic element. The second collimating element is disposed between the second excitation light source and the first dichroic element.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view of an illumination system in accordance with an embodiment of the invention;
FIG. 2 is a schematic cross-sectional view of an element integrated by the wavelength conversion element and the first excitation light source in accordance with an embodiment of the invention;
FIG. 3 is a schematic view of an illumination system in accordance with another embodiment of the invention;
FIG. 4 is a schematic view of an illumination system in accordance with another embodiment of the invention;
FIG. 5 is a schematic view of an illumination system in accordance with another embodiment of the invention;
FIG. 6 is a schematic view of an illumination system in accordance with another embodiment of the invention;
FIG. 7 is a schematic view of an illumination system in accordance with another embodiment of the invention;
FIG. 8 is a schematic view of an illumination system in accordance with another embodiment of the invention;
FIG. 9 is a schematic view of an illumination system in accordance with another embodiment of the invention;
FIG. 10 is a schematic view of an illumination system in accordance with another embodiment of the invention; and
FIG. 11 is a schematic view of a projection apparatus in accordance with an embodiment of the invention.
FIG. 12 is a schematic view of an illumination system in accordance with an embodiment of the invention.

### DETAILED DESCRIPTION OF PREFERRED EMBODIMENTS

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the invention may be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including", "comprising", or "having" and variations thereof herein is meant to encompass the items listed thereafter as well as additional items. Unless limited otherwise, the terms "connected", "coupled", and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

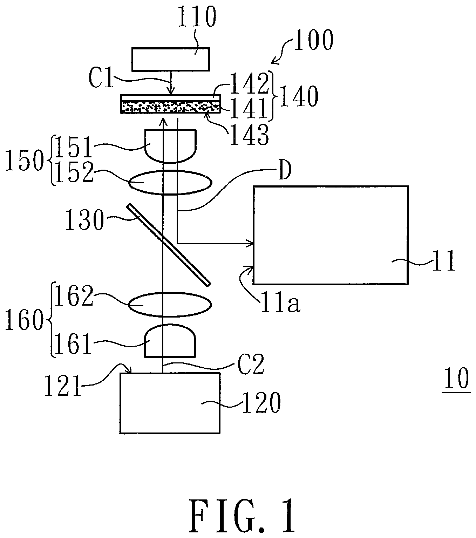

FIG. 1 is a schematic view of an illumination system in accordance with an embodiment of the invention. As shown in FIG. 1, the illumination system 10 of the embodiment includes a light source assembly 100. The light source assembly 100 includes a first excitation light source 110, a second excitation light source 120, a dichroic element 130, a wavelength conversion element 140, a first collimating element 150 and a second collimating element 160. The first excitation light source 110 is configured to provide a first excitation beam C1; the second excitation light source 120 is configured to provide a second excitation beam C2; and the first excitation beam C1 and the second excitation beam C2 have the same color, such as blue, for example. The wavelengths of the first excitation beam C1 and the second excitation beam C2 may be located within a certain range, for example, located within in a range 450∼475 nm if the two beams are blue. The dichroic element 130 is disposed between the first excitation light source 110 and the second excitation light source 120. In one embodiment, the dichroic element 130 is a dichroic mirror, through which the second excitation beam C2 is transmitted toward the first excitation light source 110. The wavelength conversion element 140 is disposed between the first excitation light source 110 and the dichroic element 130. The wavelength conversion element 140 is configured to convert the first excitation beam C1 and the second excitation beam C2 into a wavelength conversion beam D and transmit the wavelength conversion beam D toward the dichroic element 130. The first collimating element 150 is disposed between the wavelength conversion element 140 and the dichroic element 130. The second collimating element 160 is disposed between the second excitation light source 120 and the dichroic element 130.

In the embodiment, the wavelength conversion element 140 and the first excitation light source 110 are two separated elements and have a preset distance apart from each other; wherein the preset distance is not greater than the distance between the wavelength conversion element 140 and the dichroic element 130. The first excitation light source 110 may be a light emitting diode, a laser light source or other suitable light source. Similarly, the second excitation light source 120 may be a light emitting diode, a laser light source or other suitable source. In another embodiment, a first excitation light source 110 may be a light emitting diode chip or a laser diode chip. The structures of the first excitation light source 110 and the second excitation light source 120 may be the same or not. The wavelength conversion element 140 has a wavelength conversion material layer 141 and a dichroic layer 142. The dichroic layer 142 is disposed on the wavelength conversion material layer 141 and adjacent to the first excitation light source 110. In other words, the dichroic layer 142 is disposed between the wavelength conversion material layer 141 and the first excitation light source 110. The wavelength conversion material layer 141 includes wavelength conversion material such as fluorescent powder or phosphor powder, but the invention is not limited thereto. The surfaces of the wavelength conversion material layer 141 are configured to absorb the first excitation beam C1 and the second excitation beam C2, and the wavelength conversion material layer 141 emits the wavelength conversion beam D to the dichroic element 130. The first excitation beam C1 may pass through the dichroic layer 142 and then is transmitted to the wavelength conversion material layer 141. The wavelength conversion beam D emitted from the wavelength conversion material may be transmitted toward various directions; that is, a portion of the wavelength conversion beam D is transmitted toward the dichroic element 130 and a portion of the wavelength conversion beam D is transmitted toward the dichroic layer 142. Therefore, by using the dichroic layer 142 to reflect the wavelength conversion beam D transmitting toward the dichroic layer 142 so as to direct the wavelength conversion beam D to transmit toward the dichroic element 130, the total optical output of the wavelength conversion beam D transmitting to the dichroic element 130 is increased.

In the embodiment, the first excitation light source 110 and the second excitation light source 120 are disposed on the two sides of the dichroic element 130, respectively. The second excitation beam C2 may pass through the dichroic element 130 and the wavelength conversion beam D may be reflected by the dichroic element 130. After passing through the dichroic element 130, the second excitation beam C2 is transmitted to one side of the wavelength conversion material layer 141 facing the dichroic element 130. After passing through the dichroic layer 142, the first excitation beam C1 is transmitted to one side of the wavelength conversion material layer 141 facing the dichroic layer 142. In the embodiment, by using the first excitation beam C1 and the second excitation beam C2 to excite the wavelength conversion material through the two sides of the wavelength conversion element 140, the output of the wavelength conversion beam D is enhanced without increasing the light etendue.

The first collimating element 150 and the second collimating element 160 may have the same configuration. In the embodiment, for example, the first collimating element 150 includes a collimating lens 151 and a lens 152. The lens 152 is disposed between the collimating lens 151 and the dichroic element 130. The second collimating element 160 includes a collimating lens 161 and a lens 162. The lens 162 is disposed between the collimating lens 161 and the dichroic element 130. In the embodiment, the collimating lenses 151, 161 have the same shape and the lenses 152, 162 have the same shape. However, the specified configurations of the first collimating element 150 and the second collimating element 160 as well as the quantities of the collimating lens and lens therein are not limited in the invention. Namely, a designer may provide collimating lens and lens with different structures and quantities in response to actual requirements. Further, the optical distance of the second excitation beam C2 from the second excitation light source 120 to the dichroic element 130 is equal to the optical distance of the wavelength conversion beam D from the wavelength conversion element 140 to the dichroic element 130. By using the first collimating element 150 and the second collimating element 160 to control the irradiation range of the second excitation beam C2, the facula of the second excitation beam C2 on the wavelength conversion element 140 is similar to that of the second excitation beam C2 on the light-exiting surface 121 of the second excitation light source 120. In one embodiment, the shape and area size of the light-exiting surface 121 of the second excitation light source 120 are same as those of the light-exiting surface 143 of the wavelength conversion element 140, respectively. Therefore, the second excitation beam C2 may substantially cover the entire wavelength conversion element 140, thereby improving light utilization and avoiding light losses.

The color configuration of the first excitation beam C1, the second excitation beam C2 and the wavelength conversion beam D may be determined according to actual requirements. For example, the color configuration may be selected from one of: (1) both of the first excitation beam C1 and the second excitation beam C2 are blue light, and the wavelength conversion beam D is green light; (2) both of the first excitation beam C1 and the second excitation beam C2 are blue light, and the wavelength conversion beam D is red light; (3) both of the first excitation beam C1 and the second excitation beam C2 are blue light, and the wavelength conversion beam D is yellow light; and (4) both of the first excitation beam C1 and the second excitation beam C2 are ultraviolet light, and the wavelength conversion beam D is white light.

As shown in FIG. 1, the illumination system 10 of the embodiment may further include other optical element(s), which is disposed on the transmission path of the wavelength conversion beam D after passing through the dichroic element 130. The optical element may include a light equalizing element (e.g., light integral rod or lens array), a lens or a mirror, and the quantity of the aforementioned optical element may be one or more than one. FIG. 1 is exemplified by having a light integral rod 11, to which the wavelength conversion beam D is transmitted via the dichroic element 130. In one embodiment, the ratio of the area size of the light-entering end 11a of the light integral rod 11 to the area size of the light-exiting surface 143 of the wavelength conversion element 140 is ranged from 0.9 to 1.1. The shape of the light-entering end 11a is similar to that of the light-exiting surface 143; therefore, the wavelength conversion beam D may be received completely.

In the embodiment, the wavelength conversion element 140 and the first excitation light source 110 are two separated elements. In another embodiment, the wavelength conversion element may be attached to the first excitation light source. For example, the first light excitation light source may be the light emitting diode chip or the laser diode chip. The first light excitation light source and the wavelength conversion element are packaged together by the transparent resin or other transparent material (not shown). This embodiment is the wavelength conversion element disposed between the first excitation light source and the dichroic element. In other embodiment, the wavelength conversion element may be attached the first excitation light source, and then adds a transparent protective layer above so as to protect the wavelength conversion element (not shown).

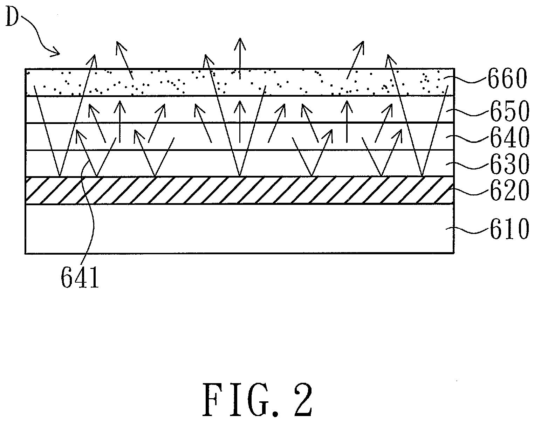

FIG. 2 is a schematic cross-sectional view of an element integrated by the wavelength conversion element and the first excitation light source in accordance with an embodiment of the invention. As shown in FIG. 2, the element includes a conductive carrier 610, a reflective layer 620, a hole-transmission layer 630, a light-emitting layer 640, an electron transmission layer 650 and a wavelength conversion layer 660. The layers are sequentially stacked, wherein the positions of the hole-transmission layer 630 and the electron transmission layer 650 are interchangeable. The electrical holes and electrons respectively provided by the hole-transmission layer 630 and the electron transmission layer 650 are combined in the light-emitting layer 640 to generate photons, and accordingly the light 641 is formed and emitted out from the light-emitting layer 640. A portion of the light 641 from the light emitting layer 640 transmitting toward the reflective layer 620 is reflected to the wavelength conversion layer 660, and the portion of light 641 emitting toward the wavelength conversion layer 660 is defined as the first excitation beam C1. The wavelength conversion layer 660 then converts the first excitation beam C1 into the wavelength conversion beam D and a portion of the wavelength conversion beam D transmitting toward the reflective layer 620 is reflected and then emitted out the element through the wavelength conversion layer 660.

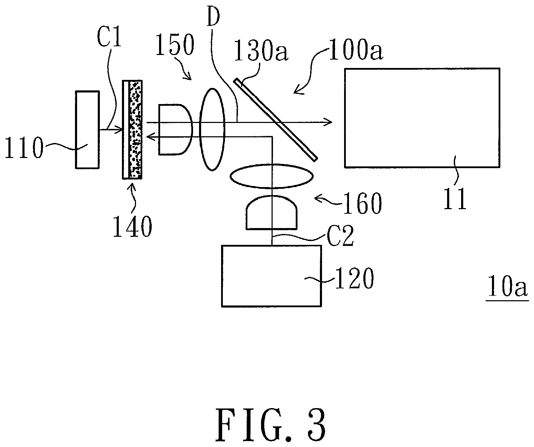

FIG. 3 is a schematic view of an illumination system in accordance with another embodiment of the invention. As shown in FIG. 3, the illumination system 10a of the embodiment is similar to the illumination system 10 of FIG. 1, and only the difference between the two is described in the following. In the illumination system 10a of the embodiment, the first excitation light source 110 and the second excitation light source 120 of the light source assembly 100a are disposed on the same side of the dichroic element 130a. The second excitation beam C2 may be reflected by the dichroic element 130a and the wavelength conversion beam D may pass through the dichroic element 130a.

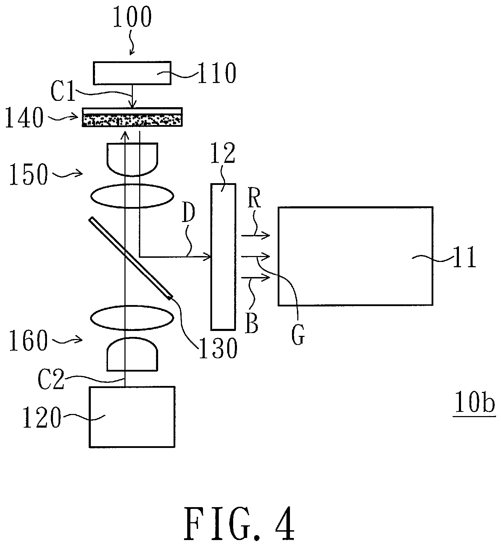

FIG. 4 is a schematic view of an illumination system in accordance with another embodiment of the invention. As shown in FIG. 4, the illumination system 10b of the embodiment is similar to the illumination system 10 of FIG. 1, and only the difference between the two is described in the following. Compared with the illumination system 10 of FIG. 1, the illumination system 10b of the embodiment further includes a color wheel 12. The color wheel 12 is disposed on the transmission path of the wavelength conversion beam D reflected by the dichroic element 130. In the embodiment, the first excitation beam C1 and the second excitation beam C2 respectively provided by the first excitation light source 110 and the second excitation light source 120 are ultraviolet light, and the wavelength conversion beam D emitted from the wavelength conversion element 140 is white light. Per revolution of the color wheel 12, the wavelength conversion beam D may be sequentially filtered into beams with various colors, such as red beam R, green beam G and blue beam B, which are transmitted to the light integral rod 11 in timing. It is to be noted that the colors of the beams filtered by the color wheel 12 and the generating sequence of the beams with various colors are not limited in the invention.

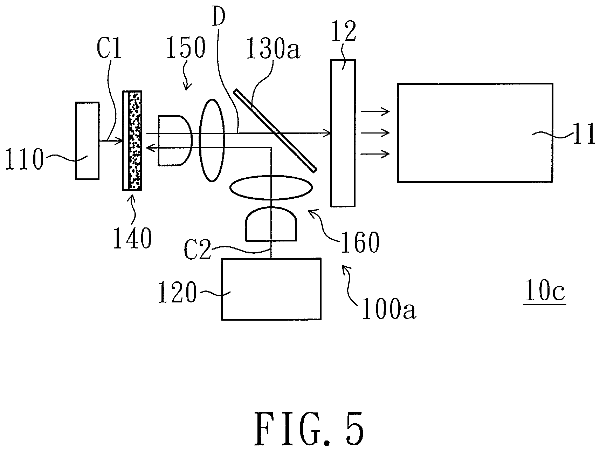

FIG. 5 is a schematic view of an illumination system in accordance with another embodiment of the invention. As shown in FIG. 5, the illumination system 10c of the embodiment is similar to the illumination system 10b of FIG. 4, and only the difference between the two is described in the following. In the illumination system 10c of the embodiment, the first excitation light source 110 and the second excitation light source 120 of the light source assembly 100a are disposed on the same side of the dichroic element 130a. The second excitation beam C2 may be reflected by the dichroic element 130a; and the wavelength conversion beam D may pass through the dichroic element 130a and then is transmitted to the color wheel 12.

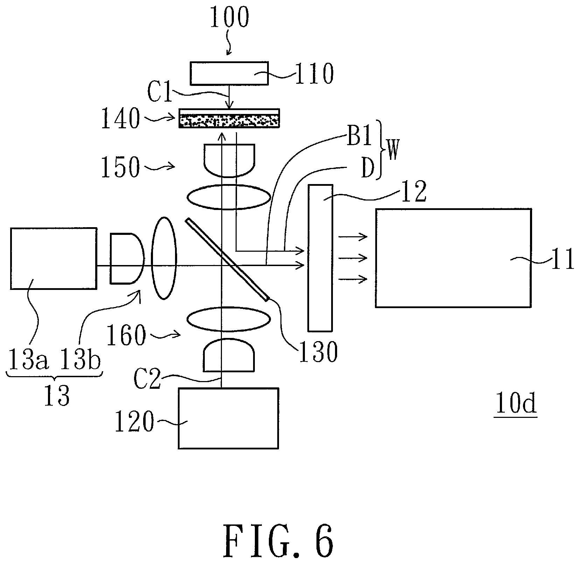

FIG. 6 is a schematic view of an illumination system in accordance with another embodiment of the invention. As shown in FIG. 6, the illumination system 10d of the embodiment is similar to the illumination system 10b of FIG. 4, and only the difference between the two is described in the following. In the illumination system 10d of the embodiment, the first excitation beam C1 and the second excitation beam C2 respectively provided by the first excitation light source 110 and the second excitation light source 120 are blue light, and the wavelength conversion beam D emitted from the wavelength conversion element 140 is yellow light. In addition, the illumination system 10d further includes a blue light source assembly 13. The blue light source assembly 13 and the second excitation light source 120 are disposed on the same side of the dichroic element 130. The blue light source assembly 13 is configured to provide a blue beam B1. The blue beam B1 passes through the dichroic element 130 and is combined with wavelength conversion beam D to form a white beam W. The white beam W is then transmitted to the color wheel 12. The blue light source assembly 13 includes a blue light source 13a and a collimating element 13b. The blue light source 13a may be a blue light emitting diode, a laser light source, or other suitable light source. The collimating element 13b may have a structure same as those of the first collimating element 150 and the second collimating element 160, for example.

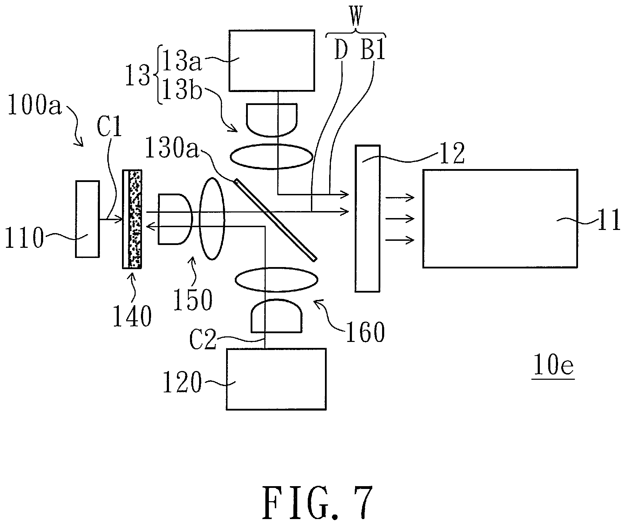

FIG. 7 is a schematic view of an illumination system in accordance with another embodiment of the invention. As shown in FIG. 7, the illumination system 10e of the embodiment is similar to the illumination system 10d of FIG. 6, and only the difference between the two is described in the following. In the illumination system 10e of the embodiment, the first excitation light source 110 and the second excitation light source 120 of the light source assembly 100a are disposed on the same side of the dichroic element 130a. The second excitation beam C2 may be reflected by the dichroic element 130a; and the wavelength conversion beam D may pass through the dichroic element 130a and then is transmitted to the color wheel 12. The blue light source assembly 13 and the second excitation light source 120 are disposed on the two sides of the dichroic element 130a. The blue light source assembly 13 is configured to provide the blue beam B1 to the dichroic element 130a. The blue beam B1 may be reflected by the dichroic element 130 and then combined with the wavelength conversion beam D to form a white beam W. The white beam W is then transmitted to the color wheel 12.

Each one of the illumination systems 10∼10e of the above embodiments has one light source assembly 100 or 100a. However, in another embodiment, the illumination system may include more than one light source assembly having a structure same as that of the light source assembly 100 or 100a.

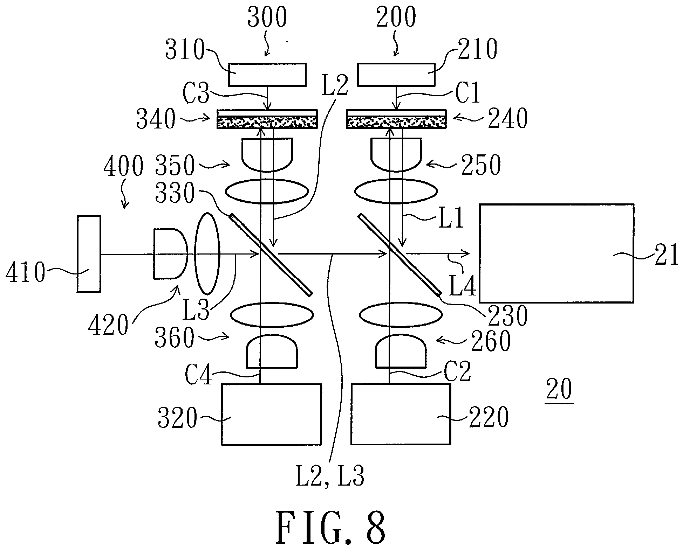

FIG. 8 is a schematic view of an illumination system in accordance with another embodiment of the invention. As shown in FIG. 8, the illumination system 20 of the embodiment includes a first light source assembly 200 configured to provided a first color beam L1, a second light source assembly 300 configured to provided a second color beam L2, and a third light source assembly 400 configured to provided a third color beam L3; wherein the first color beam L1, the second color beam L2 and the third color beam L3 may be integrated as an illumination beam L4. The first light source assembly 200 includes a first excitation light source 210, a second excitation light source 220, a first dichroic element 230 and a first wavelength conversion element 240. The first excitation light source 210 is configured to provide a first excitation beam C1; the second excitation light source 220 is configured to provide a second excitation beam C2; and the first excitation beam C1 and the second excitation beam C2 have the same color. The first dichroic element 230 is disposed between the first excitation light source 210 and the second excitation light source 220. The second excitation beam C2 is transmitted toward the first excitation light source 210 via the first dichroic element 230. The first wavelength conversion element 240 is disposed between the first excitation light source 210 and the first dichroic element 230. The first wavelength conversion element 240 is configured to convert the first excitation beam C1 and the second excitation beam C2 into a first wavelength conversion beam and transmit the first wavelength conversion beam toward the first dichroic element 230; wherein the first wavelength conversion beam is defined as the aforementioned first color beam L1.

The second light source assembly 300 includes a third excitation light source 310, a fourth excitation light source 320, a second dichroic element 330 and a second wavelength conversion element 340. The third excitation light source 310 is configured to provide a third excitation beam C3; the fourth excitation light source 320 is configured to provide a fourth excitation beam C4; and the third excitation beam C3 and the fourth excitation beam C4 have the same color. The second dichroic element 330 is disposed between the third excitation light source 310 and the fourth excitation light source 320. The fourth excitation beam C4 is transmitted toward the third excitation light source 310 via the second dichroic element 330. The second wavelength conversion element 340 is disposed between the third excitation light source 310 and the second dichroic element 330. The second wavelength conversion element 340 is configured to convert the third excitation beam C3 and the fourth excitation beam C4 into a second wavelength conversion beam and transmit the second wavelength conversion beam toward the second dichroic element 330; wherein the second wavelength conversion beam is defined as the aforementioned second color beam L2.

The third light source assembly 400 includes a light source 410 configured to provide the third color beam L3. The light source 410 may be a light emitting diode, a laser light source, or other suitable light source. The third light source assembly 400 may further include a collimating element 420, which is disposed on the transmission path of the third color beam L3.

In the embodiment, the first light source assembly 200 and the second light source assembly 300 have a configuration similar to that of the light source assembly 100. The first wavelength conversion element 240 and the second wavelength conversion element 340 have a structure same as that of the wavelength conversion element 140. In one embodiment, the first wavelength conversion element 240 and the second wavelength conversion element 340 may cover the first excitation light source 210 and the third excitation light source 310, respectively. In another embodiment, the first wavelength conversion element and the first excitation light source may be integrated as an element similar to that shown in FIG. 2; and the second wavelength conversion element and the third excitation light source may be integrated as an element similar to that shown in FIG. 2. Further, the first excitation light source 210, the second excitation light source 220, the third excitation light source 310 and the fourth excitation light source 320 each may be a light emitting diode, a laser light source, or other suitable light source. In addition, the first light source assembly 200 may further include a first collimating element 250, which is disposed between the first wavelength conversion element 240 and the first dichroic element 230, and a second collimating element 260, which is disposed between the second wavelength conversion element 220 and the first dichroic element 230. The second light source assembly 300 may further include a third collimating element 350, which is disposed between the second wavelength conversion element 340 and the second dichroic element 330, and a fourth collimating element 360, which is disposed between the fourth wavelength conversion element 320 and the second dichroic element 330.

In the embodiment, the second dichroic element 330 is disposed between the first dichroic element 230 and the third light source assembly 400; and the third color beam L3 sequentially passes through the second dichroic element 330 and the first dichroic element 230. The third excitation light source 310 and the fourth excitation light source 320 are disposed on the two sides of the second dichroic element 330, respectively. The fourth excitation beam C4 may pass through the second dichroic element 330; the second color beam L2 may be reflected to the first dichroic element 230 by the second dichroic element 330; and the second color beam L2 may pass through the first dichroic element 230. The first excitation light source 210 and the second excitation light source 220 are disposed on the two sides of the first dichroic element 230, respectively. The second excitation beam C2 may pass through the first dichroic element 230; the first color beam L1 may be reflected by the first dichroic element 230, so that the first color beam L1, the second color beam L2 and the third color beam L3 are integrated as the illumination beam L4.

In the embodiment, the first excitation beam C1, the second excitation beam C2, the third excitation beam C3 and the fourth excitation beam C4 are blue light; but the invention is not limited thereto. The first color beam L1 is green light, the second color beam L2 is red light and the third color beam L3 is blue light; but the invention is not limited thereto. In another embodiment, the colors of the first color beam L1 and the second color beam L2 are interchangeable. In addition, the first light source assembly 200, the second light source assembly 300 and the third light source assembly 400 may be configured to simultaneously emit light or not emit light simultaneously. For example, the first light source assembly 200, the second light source assembly 300 and the third light source assembly 400 may sequentially provide the first color beam L1, the second color beam L2 and the third color beam L3 in timing, respectively; and accordingly, the illumination beam L4 at each time point includes only one of the first color beam L1, the second color beam L2 and the third color beam L3. In another embodiment, the first light source assembly 200, the second light source assembly 300 and the third light source assembly 400 may simultaneously provide the first color beam L1, the second color beam L2 and the third color beam L3, respectively; and accordingly, the illumination beam L4 at each time point is form by a mix of the first color beam L1, the second color beam L2 and the third color beam L3.

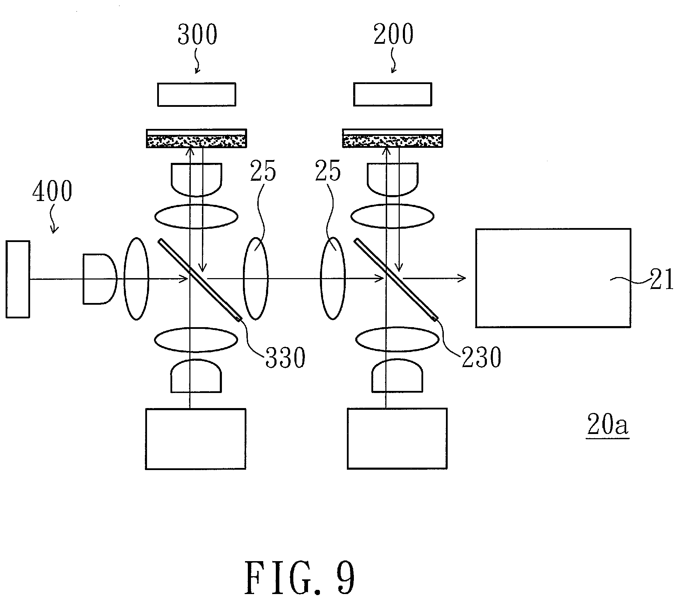

Because the first light source assembly 200 and the second light source assembly 300 have a configuration similar to that of the light source assembly 100, the optical powers of the first color beam L1 and the second color beam L2 may be enhanced without increasing the light etendue. In addition, the illumination system 20 of the embodiment may further include other optical element(s), which is disposed on the transmission path of the illumination beam L4. The optical element may include a light equalizing element (e.g., light integral rod or lens array), a lens or a mirror, and the quantity of the aforementioned optical element may be one or more than one. FIG. 8 is exemplified by having a light integral rod 21. Further, other suitable optical elements may be disposed between the first dichroic element 230 and the second dichroic element 330 in response to actual requirements. As shown in FIG. 9, for example, the illumination system 20a of the embodiment further includes at least one lens 25, which is disposed between the first dichroic element 230 and the second dichroic element 330. Although FIG. 9 is exemplified by having two lenses 25, the quantity of the lens 25 or other optical element is not limited in the invention.

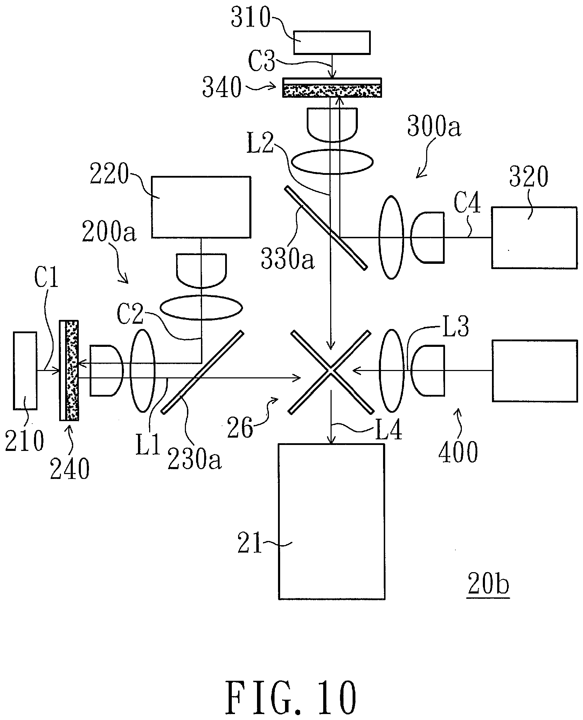

FIG. 10 is a schematic view of an illumination system in accordance with another embodiment of the invention. As shown in FIG. 10, the illumination system 20b of the embodiment is similar to the illumination system 20 of FIG. 8, and only the difference between the two is described in the following. The illumination system 20b of the embodiment further includes a beam combiner 26, which is disposed among the first light source assembly 200a, the second light source assembly 300a and the third light source assembly 400. The first light source assembly 200a and the third light source assembly 400 are disposed on the two opposite sides of the beam combiner 26, respectively. The first color beam L1 and the third color beam L3 may be reflected by the beam combiner 26; the second color beam L2 may pass through the beam combiner 26; and so that the first color beam L1, the second color beam L2 and the third color beam L3 may be integrated as the illumination beam L4. In the embodiment, the beam combiner 26 may be an X beam combiner plate or an X beam combiner prism.

In the embodiment, the first light source assembly 200a and the second light source assembly 300a are similar to the light source assembly 100a in FIG. 3. That is, in the first light source assembly 200a, the first excitation light source 210 and the second excitation light source 220 are disposed on the same side of the first dichroic element 230a. The second excitation beam C2 may be reflected by the first dichroic element 230a; and the first color beam L1 may pass through the first dichroic element 230a and then is transmitted to the beam combiner 26. The third excitation light source 310 and the fourth excitation light source 320 are disposed on the same side of the second dichroic element 330a. The fourth excitation beam C4 may be reflected by the second dichroic element 330a; and the second color beam L2 may pass through the second dichroic element 330a and then is transmitted to the beam combiner 26.

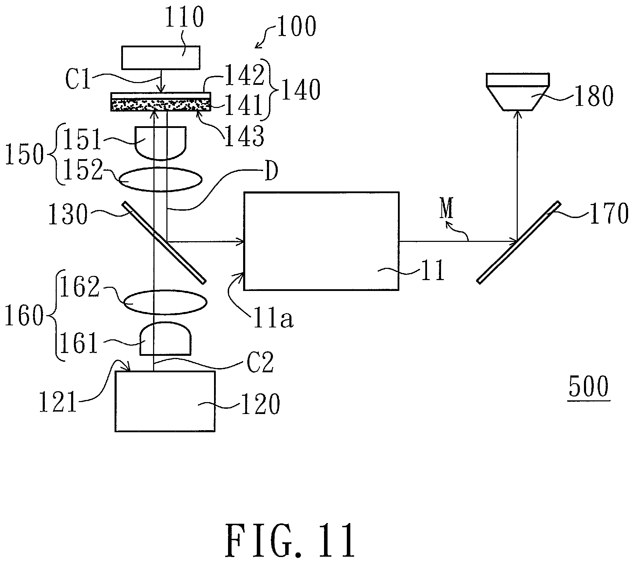

FIG. 11 is a schematic view of a projection apparatus in accordance with an embodiment of the invention. As shown in FIG. 11, the projection apparatus 500 of the embodiment includes the illumination system 10 of FIG. 1, a light valve 170 and a projection lens 180. When the wavelength conversion beam D provided by the illumination system 10 is transmitted to the light equalizing element 11 (e.g., a light integral rod or a lens array), the wavelength conversion beam D first is equalized by the light equalizing element 11 and then is emitted on the light valve 170 uniformly. In the embodiment, the light valve 170 may be a digital micromirror device (DMD), a liquid crystal on silicon panel (LCoS) or other suitable component. The light valve 170 is configured to convert the wavelength conversion beam D into an image beam M. The image beam M is then projected into a screen (not shown) through the projection lens 180.

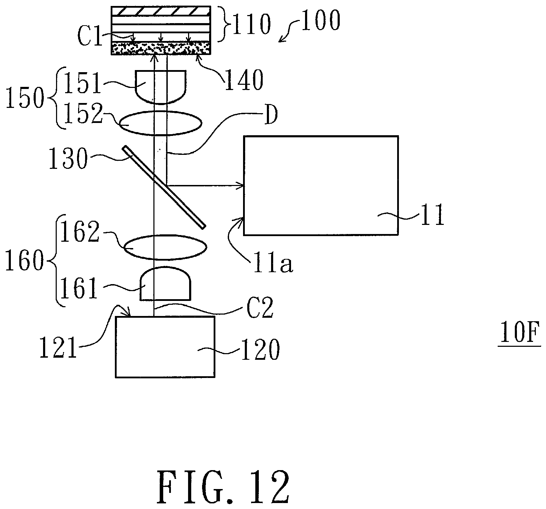

FIG. 12 is a schematic view of an illumination system in accordance with another embodiment of the invention. As shown in FIG. 12, the illumination system 10F includes a light source assembly 100. The light source assembly 100 includes a first excitation light source 110, a second excitation light source 120, a dichroic element 130, a wavelength conversion element 140, a first collimating element 150 and a second collimating element 160. The disposition of the first excitation light source 110 and the wavelength conversion element 140 of the embodiment of the invention is as well as the light source assembly of FIG. 2. For example, the first light excitation light source 110 and the wavelength conversion element 140 are packaged together by the transparent resin or other transparent material (not shown). This embodiment is the wavelength conversion element 140 disposed between the first excitation light source 110 and the dichroic element 130. In other embodiment, the wavelength conversion element 140 may be attached the first excitation light source 110, and then adds a transparent protective layer above so as to protect the wavelength conversion element (not shown).

The first excitation light source 110 is configured to provide a first excitation beam C1. The second excitation light source 120 is configured to provide a second excitation beam C2, and the first excitation beam C1 and the second excitation beam C2 have the same color, such as blue, for example. The wavelengths of the first excitation beam C1 and the second excitation beam C2 may be located within a certain range. For example, The wavelengths of the first excitation beam C1 and the second excitation beam C2 may be located within in a range 450∼475 nm if the two beams are blue. The dichroic element 130 is disposed between the first excitation light source 110 and the second excitation light source 120. In one embodiment, the dichroic element 130 is a dichroic mirror, through which the second excitation beam C2 is transmitted toward the first excitation light source 110. The wavelength conversion element 140 is disposed between the first excitation light source 110 and the dichroic element 130. The wavelength conversion element 140 is configured to convert the first excitation beam C1 and the second excitation beam C2 into a wavelength conversion beam D and transmit the wavelength conversion beam D toward the dichroic element 130. The first collimating element 150 is disposed between the wavelength conversion element 140 and the dichroic element 130. The second collimating element 160 is disposed between the second excitation light source 120 and the dichroic element 130.

In summary, in the illumination system of the invention, the light source assembly has two excitation light sources for providing excitation beams and the two excitation beams excite the wavelength conversion element to emit the wavelength conversion through the two sides of the wavelength conversion element, respectively. Therefore, the optical power of the wavelength conversion beam may be enhanced without increasing the light etendue, and consequentially the illumination system has enhanced optical power of the beam provided by the illumination system.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the appended claims.

Therefore, the term "the invention", "the present invention" or the like is not necessary limited the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims.

## Claims

1. A projection apparatus (500) comprising a first light source assembly (100, 200), wherein the first light source assembly (100, 200) comprises:
a first excitation light source (110, 210), configured to provide a first excitation beam (C1),
a second excitation light source (120, 220), configured to provide a second excitation beam (C2), wherein the first excitation beam (C1) and the second excitation beam (C2) have the same color,
a first dichroic element (130, 230), wherein the second excitation beam (C2) is transmitted toward the first excitation light source (110, 210) via the first dichroic element (130, 230),
a first wavelength conversion element (140, 240), disposed between the first excitation light source (110, 210) and the first dichroic element (130, 230), wherein the first wavelength conversion element (140, 240) is configured to convert the first excitation beam (C1) and the second excitation beam (C2) into a first wavelength conversion beam and transmit the first wavelength conversion beam toward the first dichroic element (130, 230),
a first collimating element (150, 250), disposed between the first wavelength conversion element (140, 240) and the first dichroic element (130, 230), and
a second collimating element (160, 260), disposed between the second excitation light source (120, 220) and the first dichroic element (130, 230),
**characterized in that**:
the optical distance of the second excitation beam (C2) from the second excitation light source (120, 220) to the first dichroic element (130, 230) is equal to the optical distance of the first wavelength conversion beam from the first wavelength conversion element (140, 240) to the first dichroic element (130, 230),
the first collimating element (150, 250) and the second collimating element (160, 260) have the same configuration, and
an area size of a light-exiting surface of the second excitation light source (120, 220) is the same as an area size of a light-exiting surface of the wavelength conversion element (140, 240), respectively.

2. The projection apparatus (500) according to claim 1, further comprising a light integral rod (11), wherein the first wavelength conversion beam is transmitted to the light integral rod (11) through the first dichroic element (130, 230), and a ratio of an area size of a light-entering end (11a) of the light integral rod (11) to the area size of the light-exiting surface (143) of the wavelength conversion element (140, 240) is ranged from 0.9 to 1.1.

3. The projection apparatus (500) according to claim 1, further comprising a lens array, wherein the first wavelength conversion beam is transmitted to the lens array through the first dichroic element (130, 230).

4. The projection apparatus (500) according to claim 1, wherein the first excitation light source (110, 210) and the second excitation light source (120, 220) are disposed on the two sides of the first dichroic element (130, 230), respectively, the second excitation beam (C2) passes through the first dichroic element (130, 230), and the first wavelength conversion beam is reflected by the first dichroic element (130, 230), and the first dichroic element (130, 230) is disposed between the first excitation light source (110, 210) and the second excitation light source (120, 220).

5. The projection apparatus (500) according to claim 4, further comprising a color wheel (12), disposed on the transmission path of the first wavelength conversion beam reflected by the first dichroic element (130, 230).

6. The projection apparatus (500) according to claim 5, wherein both of the first excitation beam (C1) and the second excitation beam (C2) are ultraviolet light and the first wavelength conversion beam is white light.

7. The projection apparatus (500) according to claim 1, wherein the first excitation light source (110) and the second excitation light source (120) are disposed on the same side of the first dichroic element (130a), the second excitation beam (C2) is reflected by the first dichroic element (130a), and the first wavelength conversion beam (C1) passes through the first dichroic element (130a).

8. The projection apparatus (500) according to claim 7, further comprising a color wheel disposed (12) on the transmission path of the first wavelength conversion beam passing through the first dichroic element (130a).

9. The projection apparatus (500) according to claim 8, wherein both of the first excitation beam (C1) and the second excitation beam (C2) are blue light and the first wavelength conversion beam is yellow light, the illumination system further comprises a blue light source assembly (13), the blue light source assembly (13) and the second excitation light source (120) are disposed on the two sides of the first dichroic element (130a), the blue light source assembly (13) is configured to provide a blue beam to the first dichroic element (130a), the blue beam is reflected by the first dichroic element (130a) and is combined with the first wavelength conversion beam (D) to form a white beam, and the white beam is then transmitted to the color wheel (12).

10. The projection apparatus (500) according to claim 1, wherein the first wavelength conversion element (140, 240) is attached on the first excitation light source (110, 210).

11. The projection apparatus (500) according to claim 1, wherein the first wavelength conversion element (140, 240) and the first excitation light source (110, 210) have a distance, and the distance is not greater than the distance between the first wavelength conversion element (140, 240) and the first dichroic element (130, 230).

12. The projection apparatus (500) according to claim 1, further comprising a second light source assembly (300) and a third light source assembly (400), wherein the first light source assembly (200) is configured to provide a first color beam (L1), the second light source assembly (300) is configured to provide a second color beam (L2) and the third light source assembly (400) is configured to provide a third color beam (L3), the first color beam (L1), the second color beam (L2) and the third color beam (L3) are integrated as an illumination beam, and the first wavelength conversion beam is the first color beam (L1).

13. The projection apparatus (500) according to claim 12, wherein the second light source assembly (300) comprising:
a third excitation light source (310), configured to provide a third excitation beam (C3);
a fourth excitation light source (320), configured to provide a fourth excitation beam (C4), wherein the third excitation beam (C3) and the fourth excitation beam (C4) have the same color;
a second dichroic element (330), disposed between the third excitation light source (310) and the fourth excitation light source (320), wherein the fourth excitation beam is transmitted toward the third excitation light source (310) through the second dichroic element (330); and
a second wavelength conversion element (340), disposed between the third excitation light source (310) and the second dichroic element (330), wherein the second wavelength conversion element (340) is configured to convert the third excitation beam (C3) and the fourth excitation beam (C4) into a second wavelength conversion beam and transmit the second wavelength conversion beam toward the second dichroic element (330), wherein the second wavelength conversion beam is the second color beam.

14. The projection apparatus (500) according to claim 13, wherein the second dichroic element (330) is disposed between the first dichroic element (230) and the third light source assembly (400), the third color beam (L3) sequentially passes through the second dichroic element (330) and the first dichroic element (230), the third excitation light source (310) and the fourth excitation light source (320) are disposed on the two sides of the second dichroic element (330), respectively, the fourth excitation beam (C4) passes through the second dichroic element (330), the second color beam (L2) is reflected to the first dichroic element (230) by the second dichroic element (330), the second color beam (L2) passes through the first dichroic element (230), the first excitation light source (210) and the second excitation light source (220) are disposed on the two sides of the first dichroic element (230), respectively, the second excitation beam (C2) passes through the first dichroic element (230), the first color beam (L1) is reflected by the first dichroic element (230), and the first color beam (L1), the second color beam (L2) and the third color beam (L3) is integrated as the illumination beam.

15. The projection apparatus (500) according to claim 14, further comprising at least one lens (25) disposed between the first dichroic element (230) and the second dichroic element (330).

16. The projection apparatus (500) according to claim 12, further comprising a beam combiner (26) disposed among the first light source assembly (200a), the second light source assembly (300a) and the third light source assembly (400), wherein the first light source assembly (200a) and the third light source assembly (400) are disposed on the two opposite sides of the beam combiner (26), respectively, the first color beam (L1) and the third color beam (L3) are reflected by the beam combiner (26), the second color beam passes through the beam combiner (26), the first color beam (L1), the second color beam (L2) and the third color beam (L3) are integrated as the illumination beam.

17. The projection apparatus (500) according to claim 16, wherein the first excitation light source (210) and the second excitation light source (220) are disposed on the same side of the first dichroic element (230a), the second excitation beam (C2) is reflected by the first dichroic element (230a), the first color beam (L1) passes through the first dichroic element (230a) and then is transmitted to the beam combiner (26), the third excitation light source (310) and the fourth excitation light source (320) are disposed on the same side of the second dichroic (330a) element, the fourth excitation beam (C4) is reflected by the second dichroic element (330a), and the second color beam (L2) passes through the second dichroic element (330a) and then is transmitted to the beam combiner.

18. The projection apparatus (500) according to claim 13, wherein the first light source assembly (200) further comprises the first collimating element (250), disposed between the first wavelength conversion element (240) and the first dichroic element (230), and a second collimating element (260), disposed between the second excitation light source (220) and the first dichroic element (230);
wherein the second light source assembly (300) further comprises a third collimating element (350), disposed between the second wavelength conversion element (340) and the second dichroic element (330), and a fourth collimating element (360), disposed between the fourth excitation light source (320) and the second dichroic element (330).

19. The projection apparatus (500) according to claim 1, further comprising a light valve (170) and a projection lens (180), wherein a light equalizing element (11) is disposed on the transmission path of the first wavelength conversion beam and configured to receive the first wavelength conversion beam transmitted from the first dichroic element (130,), wherein the light valve (170) is disposed on the transmission path of the first wavelength conversion beam and configured to convert the first wavelength conversion beam, transmitted from the light equalizing element (11), into an image beam, wherein the projection lens (180) is disposed on the transmission path of the image beam and is configured to project the image beam.

## Patentansprüche

1. Projektionsvorrichtung (500), die eine erste Lichtquellenanordnung (100, 200) umfasst, wobei die erste Lichtquellenanordnung (100, 200) Folgendes umfasst:
eine erste Erregungslichtquelle (110, 210), die konfiguriert ist, einen ersten Erregungsstrahl (C1) bereitzustellen,
eine zweite Erregungslichtquelle (120, 220), die konfiguriert ist, einen zweiten Erregungsstrahl (C2) bereitzustellen, wobei der erste Erregungsstrahl (C1) und der zweite Erregungsstrahl (C2) die gleiche Farbe haben,
ein erstes dichromatisches Element (130, 230), wobei der zweite Erregungsstrahl (C2) über das erste dichromatische Element (130, 230) zu der ersten Erregungslichtquelle (110, 210) übertragen wird,
ein erstes Wellenlängen-Umsetzungselement (140, 240), das zwischen der ersten Erregungslichtquelle (110, 210) und dem ersten dichromatischen Element (130, 230) angeordnet ist, wobei das erste Wellenlängen-Umsetzungselement (140, 240) konfiguriert ist, den ersten Erregungsstrahl (C1) und den zweiten Erregungsstrahl (C2) in einen ersten Strahl mit umgesetzter Wellenlänge umzusetzen und den ersten Strahl mit umgesetzter Wellenlänge zu dem ersten dichromatischen Element (130, 230) zu übertragen,
ein erstes Kollimator-Element (150, 250), das zwischen dem ersten Wellenlängen-Umsetzungselement (140, 240) und dem ersten dichromatischen Element (130, 230) angeordnet ist, und
ein zweites Kollimator-Element (160, 260), das zwischen der zweiten Erregungslichtquelle (120, 220) und dem ersten dichromatischen Element (130, 230) angeordnet ist,
**dadurch gekennzeichnet**, das:
der optische Abstand des zweiten Erregungsstrahls (C2) von der zweiten Erregungslichtquelle (120, 220) zu dem ersten dichromatischen Element (130, 230) gleich dem optischen Abstand des ersten Strahls mit umgesetzter Wellenlänge von dem ersten Wellenlängen-Umsetzungselement (140, 240) zu dem ersten dichromatischen Element (130, 230) ist,
das erste Kollimator-Element (150, 250) und das zweite Kollimator-Element (160, 260) die gleiche Konfiguration aufweisen und
eine Flächengröße einer Lichterregungsfläche der zweiten Erregungslichtquelle (120, 220) jeweils genauso groß wie eine Flächengröße einer Lichterregungsfläche des Wellenlängen-Umsetzungselements (140, 240) ist.

2. Projektionsvorrichtung (500) nach Anspruch 1, die ferner einen Lichtintegrierstab (11) umfasst, wobei der erste Strahl mit umgesetzter Wellenlänge durch das erste dichromatische Element (130, 230) zu dem Lichtintegrierstab (11) übertragen wird und ein Verhältnis einer Flächengröße eines Lichteintrittsendes (11a) des Lichtintegrierstabs (11) zu der Flächengröße der Lichterregungsfläche (143) des Wellenlängen-Umsetzungselements (140, 240) im Bereich von 0,9 bis 1,1 liegt.

3. Projektionsvorrichtung (500) nach Anspruch 1, die ferner eine Linsenanordnung umfasst, wobei der erste Strahl mit umgesetzter Wellenlänge durch das erste dichromatische Element (130, 230) zu der Linsenanordnung übertragen wird.

4. Projektionsvorrichtung (500) nach Anspruch 1, wobei die erste Erregungslichtquelle (110, 210) und die zweite Erregungslichtquelle (120, 220) auf der einen bzw. der anderen Seite des ersten dichromatischen Elements (130, 230) angeordnet sind, wobei der zweite Erregungsstrahl (C2) durch das erste dichromatische Element (130, 230) verläuft und der erste Strahl mit umgesetzter Wellenlänge durch das erste dichromatische Element (130, 230) reflektiert wird und wobei das erste dichromatische Element (130, 230) zwischen der ersten Erregungslichtquelle (110, 210) und der zweiten Erregungslichtquelle (120, 220) angeordnet ist.

5. Projektionsvorrichtung (500) nach Anspruch 4, die ferner ein Farbrad (12) umfasst, das auf dem Übertragungspfad des ersten Strahls mit umgesetzter Wellenlänge angeordnet ist, der durch das erste dichromatische Element (130, 230) reflektiert wird.

6. Projektionsvorrichtung (500) nach Anspruch 5, wobei der erste Erregungsstrahl (C1) und der zweite Erregungsstrahl (C2) ultraviolettes Licht sind und der erste Strahl mit umgesetzter Wellenlänge weißes Licht ist.

7. Projektionsvorrichtung (500) nach Anspruch 1, wobei die erste Erregungslichtquelle (110) und die zweite Erregungslichtquelle (120) auf der gleichen Seite des ersten dichromatischen Elements (130a) angeordnet sind, wobei der zweite Erregungsstrahl (C2) durch das erste dichromatische Element (130a) reflektiert wird und wobei der erste Strahl (C1) mit umgesetzter Wellenlänge durch das erste dichromatische Element (130a) verläuft.

8. Projektionsvorrichtung (500) nach Anspruch 7, die ferner ein Farbrad (12) umfasst, das auf dem Übertragungspfad des ersten Strahls mit umgesetzter Wellenlänge angeordnet ist, der durch das erste dichromatische Element (130a) verläuft.

9. Projektionsvorrichtung (500) nach Anspruch 8, wobei der erste Erregungsstrahl (C1) und der zweite Erregungsstrahl (C2) blaues Licht sind und der erste Strahl mit umgesetzter Wellenlänge gelbes Licht ist, wobei das Beleuchtungssystem ferner eine Anordnung (13) mit einer blauen Lichtquelle umfasst, wobei die Anordnung (13) mit blauer Lichtquelle und die zweite Erregungslichtquelle (120) auf den zwei Seiten des ersten dichromatischen Elements (130a) angeordnet sind, wobei die Anordnung (13) mit blauer Lichtquelle konfiguriert ist, einen blauen Strahl für das erste dichromatische Element (130a) bereitzustellen, wobei der blaue Strahl durch das erste dichromatische Element (130a) reflektiert wird und mit dem ersten Strahl (D) mit umgesetzter Wellenlänge kombiniert wird, um einen weißen Strahl zu bilden, und wobei der weiße Strahl zu dem Farbrad (12) übertragen wird.

10. Projektionsvorrichtung (500) nach Anspruch 1, wobei das erste Wellenlängen-Umsetzungselement (140, 240) an der ersten Erregungslichtquelle (110, 210) befestigt ist.

11. Projektionsvorrichtung (500) nach Anspruch 1, wobei das erste Wellenlängen-Umsetzungselement (140, 240) und die erste Erregungslichtquelle (110, 210) einen Abstand haben, und wobei der Abstand nicht größer als der Abstand zwischen dem ersten Wellenlängen-Umsetzungselement (140, 240) und dem ersten dichromatischen Element (130, 230) ist.

12. Projektionsvorrichtung (500) nach Anspruch 1, die ferner eine zweite Lichtquellenanordnung (300) und eine dritte Lichtquellenanordnung (400) umfasst, wobei die erste Lichtquellenanordnung (200) konfiguriert ist, einen ersten Farbstrahl (L1) bereitzustellen, die zweite Lichtquellenanordnung (300) konfiguriert ist, einen zweiten Farbstrahl (L2) bereitzustellen und die dritte Lichtquellenanordnung (400) konfiguriert ist, einen dritten Farbstrahl (L3) bereitzustellen, wobei der erste Farbstrahl (L1), der zweite Farbstrahl (L2) und der dritte Farbstrahl (L3) zu einem Beleuchtungsstrahl zusammengefasst werden und wobei der erste Strahl mit umgesetzter Wellenlänge der erste Farb strahl (L1) ist.

13. Projektionsvorrichtung (500) nach Anspruch 12, wobei die zweite Lichtquellenanordnung (300) Folgendes umfasst:
eine dritte Erregungslichtquelle (310), die konfiguriert ist, einen dritten Erregungsstrahl (C3) bereitzustellen;
eine vierte Erregungslichtquelle (320), die konfiguriert ist, einen vierten Erregungsstrahl (C4) bereitzustellen, wobei der dritte Erregungsstrahl (C3) und der vierte Erregungsstrahl (C4) die gleiche Farbe haben;
ein zweites dichromatisches Element (330), das zwischen der dritten Erregungslichtquelle (310) und der vierten Erregungslichtquelle (320) angeordnet ist, wobei der vierte Erregungsstrahl durch das zweite dichromatische Element (330) zu der dritten Erregungslichtquelle (310) übertragen wird; und
ein zweites Wellenlängen-Umsetzungselement (340), das zwischen der dritten Erregungslichtquelle (310) und dem zweiten dichromatischen Element (330) angeordnet ist, wobei das zweite Wellenlängen-Umsetzungselement (340) konfiguriert ist, den dritten Erregungsstrahl (C3) und den vierten Erregungsstrahl (C4) in einen zweiten Strahl mit umgesetzter Wellenlänge umzusetzen und den zweiten Strahl mit umgesetzter Wellenlänge zu dem zweiten dichromatischen Element (330) zu übertragen, wobei der zweite Strahl mit umgesetzter Wellenlänge der zweite Farbstrahl ist.

14. Projektionsvorrichtung (500) nach Anspruch 13, wobei das zweite dichromatische Element (330) zwischen dem ersten dichromatischen Element (230) und der dritten Lichtquellenanordnung (400) angeordnet ist, wobei der dritte Farbstrahl (L3) der Reihe nach durch das zweite dichromatische Element (330) und das erste dichromatische Element (230) verläuft, wobei die dritte Erregungslichtquelle (310) und die vierte Erregungslichtquelle (320) jeweils auf den zwei Seiten des zweiten dichromatischen Elements (330) angeordnet sind, wobei der vierte Erregungsstrahl (C4) durch das zweite dichromatische Element (330) verläuft, wobei der zweite Farbstrahl (L2) durch das zweite dichromatische Element (330) zu dem ersten dichromatischen Element (230) reflektiert wird, wobei der zweite Farbstrahl (L2) durch das erste dichromatische Element (230) verläuft, wobei die erste Erregungslichtquelle (210) und die zweite Erregungslichtquelle (220) jeweils auf den zwei Seiten des ersten dichromatischen Elements (230) angeordnet sind, wobei der zweite Erregungsstrahl (C2) durch das erste dichromatische Element (230) verläuft, wobei der erste Farbstrahl (L1) durch das erste dichromatische Element (230) reflektiert wird, und wobei der erste Farbstrahl (L1), der zweite Farbstrahl (L2) und der dritte Farbstrahl (L3) zu dem Beleuchtungsstrahl zusammengefasst werden.

15. Projektionsvorrichtung (500) nach Anspruch 14, die ferner wenigstens eine Linse (25) umfasst, die zwischen dem ersten dichromatischen Element (230) und dem zweiten dichromatischen Element (330) angeordnet ist.

16. Projektionsvorrichtung (500) nach Anspruch 12, die ferner einen Strahlkombinierer (26) umfasst, der bei der ersten Lichtquellenanordnung (200a), der zweiten Lichtquellenanordnung (300a) und der dritten Lichtquellenanordnung (400) angeordnet ist, wobei die erste Lichtquellenanordnung (200a) und die dritte Lichtquellenanordnung (400) jeweils auf den zwei gegenüberliegenden Seiten des Strahlkombinierers (26) angeordnet sind, wobei der erste Farbstrahl (L1) und der dritte Farbstrahl (L3) durch den Strahlkombinierer (26) reflektiert werden, wobei der zweite Farbstrahl durch den Strahlkombinierer (26) verläuft, wobei der erste Farbstrahl (L1), der zweite Farbstrahl (L2) und der dritte Farbstrahl (L3) zu dem Beleuchtungsstrahl zusammengefasst werden.

17. Projektionsvorrichtung (500) nach Anspruch 16, wobei die erste Erregungslichtquelle (210) und die zweite Erregungslichtquelle (220) auf der gleichen Seite des ersten dichromatischen Elements (230a) angeordnet sind, wobei der zweite Erregungsstrahl (C2) durch das erste dichromatische Element (230a) reflektiert wird, wobei der erste Farbstrahl (L1) durch das erste dichromatische Element (230a) verläuft und dann zu dem Strahlkombinierer (26) übertragen wird, wobei die dritte Erregungslichtquelle (310) und die vierte Erregungslichtquelle (320) auf der gleichen Seite des zweiten dichromatischen Elements (330a) angeordnet sind, wobei der vierte Erregungsstrahl (C4) durch das zweite dichromatische Element (330a) reflektiert wird und wobei der zweite Farbstrahl (L2) durch das zweite dichromatische Element (330a) verläuft und dann zu dem Strahlkombinierer übertragen wird.

18. Projektionsvorrichtung (500) nach Anspruch 13, wobei die erste Lichtquellenanordnung (200) ferner das erste Kollimator-Element (250), das zwischen dem ersten Wellenlängen-Umsetzungselement (240) und dem ersten dichromatischen Element (230) angeordnet ist, und ein zweites Kollimator-Element (260), das zwischen der zweiten Erregungslichtquelle (220) und dem ersten dichromatischen Element (230) angeordnet ist, umfasst;
wobei die zweite Lichtquellenanordnung (300) ferner ein drittes Kollimator-Element (350), das zwischen dem zweiten Wellenlängen-Umsetzungselement (340) und dem zweiten dichromatischen Element (330) angeordnet ist, und ein viertes Kollimator-Element (360), das zwischen der vierten Erregungslichtquelle (320) und dem zweiten dichromatischen Element (330) angeordnet ist, umfasst.

19. Projektionsvorrichtung (500) nach Anspruch 1, die ferner ein Lichtventil (170) und eine Projektionslinse (180) umfasst, wobei ein Lichtequalizer (11) auf dem Übertragungspfad des ersten Strahls mit umgesetzter Wellenlänge angeordnet ist und konfiguriert ist, den ersten Strahl mit umgesetzter Wellenlänge zu empfangen, der von dem ersten dichromatischen Element (130) übertragen wird, wobei das Lichtventil (170) auf dem Übertragungspfad des ersten Strahls mit umgesetzter Wellenlänge angeordnet ist und konfiguriert ist, den ersten Strahl mit umgesetzter Wellenlänge, der von dem Lichtequalizer (11) übertragen wird, in einen Bildstrahl umzusetzen, wobei die Projektionslinse (180) auf dem Übertragungspfad des Bildstrahls angeordnet ist und konfiguriert ist, den Bildstrahl zu projizieren.

## Revendications

1. Appareil de projection (500) comportant un premier ensemble de sources de lumière (100, 200), dans lequel le premier ensemble de sources de lumière (100, 200) comporte :
une première source de lumière d'excitation (110, 210), configurée pour délivrer un premier faisceau d'excitation (C1),
une deuxième source de lumière d'excitation (120, 220), configurée pour délivrer un deuxième faisceau d'excitation (C2), dans lequel le premier faisceau d'excitation (C1) et le deuxième faisceau d'excitation (C2) ont la même couleur,
un premier élément dichroïque (130, 230), dans lequel le deuxième faisceau d'excitation (C2) est transmis vers la première source de lumière d'excitation (110, 210) via le premier élément dichroïque (130, 230),
un premier élément de conversion de longueur d'onde (140, 240), disposé entre la première source de lumière d'excitation (110, 210) et le premier élément dichroïque (110, 210), dans lequel le premier élément de conversion de longueur d'onde (140, 240) est configuré pour convertir le premier faisceau d'excitation (C1) et le deuxième faisceau d'excitation (C2) en un premier faisceau de conversion de longueur d'onde et transmettre le premier faisceau de conversion de longueur d'onde vers le premier élément dichroïque (130, 230),
un premier élément de collimation (150, 250), disposé entre le premier élément de conversion de longueur d'onde (140, 240) et le premier élément dichroïque (130, 230), et
un deuxième élément de collimation (160, 260), disposé entre le second élément de conversion de longueur d'onde (120, 220) et le premier élément dichroïque (130, 230),
**caractérisé en ce que** :
la distance optique du deuxième faisceau d'excitation (C2) depuis la deuxième source de lumière d'excitation (120, 220) jusqu'au premier élément dichroïque (130, 230) est égale à la distance optique du premier faisceau de conversion de longueur d'onde depuis le premier élément de conversion de longueur d'onde (140, 240) jusqu'au premier élément dichroïque (130, 230),
le premier élément de collimation (150, 250) et le deuxième élément de collimation (160, 260) ont la même configuration, et
une taille d'aire d'une surface de sortie de lumière de la deuxième source de lumière d'excitation (120, 220) est la même qu'une taille d'aire d'une surface de sortie de lumière de l'élément de conversion de longueur d'onde (240, 240), respectivement.

2. Appareil de projection (500) selon la revendication 1, comportant en outre une tige lumineuse intégrale (11), dans lequel le premier faisceau de conversion de longueur d'onde est transmis à la tige lumineuse intégrale (11) à travers le premier élément dichroïque (130, 230), et un rapport d'une taille d'aire d'une extrémité d'entrée de lumière (11a) de la tige lumineuse intégrale (11) sur la taille d'aire de la surface de sortie de lumière (143) de l'élément de conversion de longueur d'onde (140, 240) varie de 0,9 à 1,1.

3. Appareil de projection (500) selon la revendication 1, comportant en outre un réseau de lentilles, dans lequel le premier faisceau de conversion de longueur d'onde est transmis au réseau de lentilles à travers le premier élément dichroïque (130, 230).

4. Appareil de projection (500) selon la revendication 1, dans lequel la première source de lumière d'excitation (110, 210) et la deuxième source de lumière d'excitation (120, 220) sont disposées sur les deux côtés du premier élément dichroïque (130, 230), respectivement, le deuxième faisceau d'excitation (C2) passe à travers le premier élément dichroïque (130, 230), et le premier faisceau de conversion de longueur d'onde est réfléchi par le premier élément dichroïque (130, 230), et le premier élément dichroïque (130, 230) est disposé entre la première source de lumière d'excitation (110, 210) et la deuxième source de lumière d'excitation (120, 220).

5. Appareil de projection (500) selon la revendication 4, comportant en outre une roue chromatique (12), disposée sur le trajet de transmission du premier faisceau de conversion de longueur d'onde réfléchi par le premier élément dichroïque (130, 230).

6. Appareil de projection (500) selon la revendication 5, dans lequel le premier faisceau d'excitation (C1) et le deuxième faisceau d'excitation (C2) sont tous deux une lumière ultraviolette et le premier faisceau de conversion de longueur d'onde est une lumière blanche.

7. Appareil de projection (500) selon la revendication 1, dans lequel la première source de lumière d'excitation (110) et la deuxième source de lumière d'excitation (120) sont disposées sur le même côté du premier élément dichroïque (130a), le deuxième faisceau d'excitation (C2) est réfléchi par le premier élément dichroïque (130a), et le premier faisceau de conversion de longueur d'onde (C1) passe à travers le premier élément dichroïque (130a).

8. Appareil de projection (500) selon la revendication 7, comportant en outre une roue chromatique (12) disposée sur le trajet de transmission du premier faisceau de conversion de longueur d'onde passant à travers le premier élément dichroïque (130a).

9. Appareil de projection (500) selon la revendication 8, dans lequel le premier faisceau d'excitation (C1) et le deuxième faisceau d'excitation (C2) sont tous deux une lumière bleue et le premier faisceau de conversion de longueur d'onde est une lumière jaune, le système d'éclairage comporte en outre un ensemble de sources de lumière bleue (13), l'ensemble de sources de lumière bleue (13) et la deuxième source de lumière d'excitation (120) sont disposés des deux côtés du premier élément dichroïque (130a), l'ensemble de sources de lumière bleue (13) est configuré pour fournir un faisceau bleu au premier élément dichroïque (130a), le faisceau bleu est réfléchi par le premier élément dichroïque (130a) et est combiné avec le premier faisceau de conversion de longueur d'onde (D) pour former un faisceau blanc, et le faisceau blanc est ensuite transmis à la roue chromatique (12).

10. Appareil de projection (500) selon la revendication 1, dans lequel le premier élément de conversion de longueur d'onde (140, 240) est fixé sur la première source de lumière d'excitation (110, 210).

11. Appareil de projection (500) selon la revendication 1, dans lequel le premier élément de conversion de longueur d'onde (140, 240) et la première source de lumière d'excitation (110, 210) ont une distance, et la distance n'est pas supérieure à la distance entre le premier élément de conversion de longueur d'onde (140, 240) et le premier élément dichroïque (130, 230).

12. Appareil de projection (500) selon la revendication 1, comportant en outre un deuxième ensemble de sources de lumière (300) et un troisième ensemble de sources de lumière (400), dans lequel le premier ensemble de sources de lumière (200) est configuré pour fournir un premier faisceau de couleur (L1), le deuxième ensemble de sources de lumière (300) est configuré pour fournir un deuxième faisceau de couleur (L2) et le troisième ensemble de sources de lumière (400) est configuré pour fournir un troisième faisceau de couleur (L3), le premier faisceau de couleur (L1), le deuxième faisceau de couleur (L2) et le troisième faisceau de couleur (L3) sont intégrés sous la forme d'un faisceau d'éclairage, et le premier faisceau de conversion de longueur d'onde est le premier faisceau de couleur (L1).

13. Appareil de projection (500) selon la revendication 12, dans lequel le deuxième ensemble de sources de lumière (300) comporte :
une troisième source de lumière d'excitation (310), configurée pour délivrer un troisième faisceau d'excitation (C3) ;
une quatrième source de lumière d'excitation (320), configurée pour délivrer un quatrième faisceau d'excitation (C4), dans lequel le troisième faisceau d'excitation (C3) et le quatrième faisceau d'excitation (C4) ont la même couleur ;
un second élément dichroïque (330), disposé entre la troisième source de lumière d'excitation (310) et la quatrième source de lumière d'excitation (320), dans lequel le quatrième faisceau d'excitation est transmis vers la troisième source de lumière d'excitation (310) à travers le second élément dichroïque (330) ; et
un second élément de conversion de longueur d'onde (340), disposé entre la troisième source de lumière d'excitation (310) et le second élément dichroïque (330), dans lequel le second élément de conversion de longueur d'onde (340) est configuré pour convertir le troisième faisceau d'excitation (C3) et le quatrième faisceau d'excitation (C4) en un second faisceau de conversion de longueur d'onde et transmettre le second faisceau de conversion de longueur d'onde vers le second élément dichroïque (330), dans lequel le second faisceau de conversion de longueur d'onde est le deuxième faisceau de couleur.

14. Appareil de projection (500) selon la revendication 13, dans lequel le second élément dichroïque (330) est disposé entre le premier élément dichroïque (230) et le troisième ensemble de sources de lumière (400), le troisième faisceau de couleur (L3) passe séquentiellement à travers le second élément dichroïque (330) et le premier élément dichroïque (230), la troisième source de lumière d'excitation (310) et la quatrième source de lumière d'excitation (320) sont disposées des deux côtés du second élément dichroïque (330), respectivement, le quatrième faisceau d'excitation (C4) passe à travers le second élément dichroïque (330), le deuxième faisceau de couleur (L2) est réfléchi vers le premier élément dichroïque (230) par le second élément dichroïque (330), le deuxième faisceau de couleur (L2) passe à travers le premier élément dichroïque (230), la première source de lumière d'excitation (210) et la deuxième source de lumière d'excitation (220) sont disposées des deux côtés du premier élément dichroïque (230), respectivement, le deuxième faisceau d'excitation (C2) passe à travers le premier élément dichroïque (230), le premier faisceau de couleur (L1) est réfléchi par le premier élément dichroïque (230), et le premier faisceau de couleur (L1), le deuxième faisceau de couleur (L2) et le troisième faisceau de couleur (L3) sont intégrés sous la forme du faisceau d'éclairage.

15. Appareil de projection (500) selon la revendication 14, comportant en outre au moins une lentille (25) disposée entre le premier élément dichroïque (230) et le second élément dichroïque (330).

16. Appareil de projection (500) selon la revendication 12, comportant en outre un combinateur de faisceaux (26) disposé parmi le premier ensemble de sources de lumière (200a), le deuxième ensemble de sources de lumière (300a) et le troisième ensemble de sources de lumière (400), dans lequel le premier ensemble de sources de lumière (200a) et le troisième ensemble de sources de lumière (400) sont disposés sur les deux côtés opposés du combinateur de faisceaux (26), respectivement, le premier faisceau de couleur (L1) et le troisième faisceau de couleur (L3) sont réfléchis par le combinateur de faisceaux (26), le deuxième faisceau de couleur passe à travers le combinateur de faisceaux (26), le premier faisceau de couleur (L1), le deuxième faisceau de couleur (L2) et le troisième faisceau de couleur (L3) sont intégrés sous la forme du faisceau d'éclairage.

17. Appareil de projection (500) selon la revendication 16, dans lequel la première source de lumière d'excitation (210) et la deuxième source de lumière d'excitation (220) sont disposées sur le même côté du premier élément dichroïque (230a), le deuxième faisceau d'excitation (C2) est réfléchi par le premier élément dichroïque (230a), le premier faisceau de couleur (L1) passe à travers le premier élément dichroïque (230a) et est ensuite transmis au combinateur de faisceaux (26), la troisième source de lumière d'excitation (310) et la quatrième source de lumière d'excitation (320) sont disposées sur le même côté du second élément dichroïque (330a), le quatrième faisceau d'excitation (C4) est réfléchi par le second élément dichroïque (330a), et le deuxième faisceau de couleur (L2) passe à travers le second élément dichroïque (330a) et est ensuite transmis au combinateur de faisceaux.

18. Appareil de projection (500) selon la revendication 13, dans lequel le premier ensemble de sources de lumière (200) comporte en outre le premier élément de collimation (250), disposé entre le premier élément de conversion de longueur d'onde (240) et le premier élément dichroïque (230), et un deuxième élément de collimation (260), disposé entre la deuxième source de lumière d'excitation (220) et le premier élément dichroïque (230) ;
dans lequel le deuxième ensemble de sources de lumière (300) comporte en outre un troisième élément de collimation (350), disposé entre le second élément de conversion de longueur d'onde (340) et le second élément dichroïque (330), et un quatrième élément de collimation (360), disposé entre la quatrième source de lumière d'excitation (320) et le second élément dichroïque (330).

19. Appareil de projection (500) selon la revendication 1, comportant en outre un modulateur de lumière (170) et une lentille de projection (180), dans lequel un élément d'égalisation de lumière (11) est disposé sur le trajet de transmission du premier faisceau de conversion de longueur d'onde et configuré pour recevoir le premier faisceau de conversion de longueur d'onde transmis à partir du premier élément dichroïque (130), dans lequel le modulateur de lumière (170) est disposé sur le trajet de transmission du premier faisceau de conversion de longueur d'onde et configuré pour convertir le premier faisceau de conversion de longueur d'onde, transmis à partir de l'élément égalisateur de lumière (11), en un faisceau d'image, dans lequel la lentille de projection (180) est disposée sur le trajet de transmission du faisceau d'image et est configurée pour projeter le faisceau d'image.
